**Europäisches Patentamt**

**European Patent Office**

**Office européen des brevets**

(19)

(11) Veröffentlichungsnummer: **0 033 983**
**B1**

(12) ## EUROPÄISCHE PATENTSCHRIFT

(45) Veröffentlichungstag der Patentschrift:
**07.09.83**

(51) Int. Cl.³: **B 23 Q 3/155**

(21) Anmeldenummer: **81200026.3**

(22) Anmeldetag: **12.01.81**

(54) Werkzeugmaschine mit einem Maschinenständer für eine Arbeitsspindel, einem Werkzeugmagazin sowie einem daran angeordneten Werkzeugwechsler.

(30) Priorität: **08.02.80 CH 1015/80**

(43) Veröffentlichungstag der Anmeldung:
**19.08.81 Patentblatt 81/33**

(45) Bekanntmachung des Hinweises auf die Patenterteilung:
**07.09.83 Patentblatt 83/36**

(84) Benannte Vertragsstaaten:
**CH DE FR GB IT LI SE**

(56) Entgegenhaltungen:
**DE-A-2 525 212**
**FR-A-1 579 286**
**FR-A-2 090 161**
**FR-A-2 303 637**
**FR-A-2 307 615**
**US-A-3 242 568**
**US-A-3 256 600**

(73) Patentinhaber: **Werkzeugmaschinenfabrik Oerlikon-Bührle AG, Birchstrasse 155, CH-8050 Zürich (CH)**

(72) Erfinder: **Wernli, Hans, Ing. HTL, Birchstrasse 69, CH-8156 Oberhasli (CH)**
Erfinder: **Möri, Walter, Ing. HTL, Wallisweg 1168, CH-5742 Kölliken (CH)**

### Werkzeugmaschine mit einem Maschinenständer für eine Arbeitsspindel, einem Werkzeugmagazin sowie einem daran angeordneten Werkzeugwechsler

Die Erfindung betrifft eine Werkzeugmaschine mit einem Maschinenständer für eine Arbeitsspindel, einem vom Maschinenständer getrennt angeordneten Werkzeugmagazin sowie einem daran angeordneten Werkzeugwechsler.

Aus der schweizer Patentschrift Nr. 580 469 ist eine Werkzeugmaschine gemäß Oberbegriff des Patentanspruches 1 bekannt. Diese Werkzeugmaschine weist einen Werkzeugwechsler auf, der aus einer, am Werkzeugwechsler schwenkbar gelagerten Greiferschwinge, einem auf der Greiferschwinge wiederum schwenkbar gelagerten Greiferarm, sowie einem darauf drehbar gelagerten, mit Greiferzangen versehenen Greiferflügel besteht. Damit werden die Werkzeuge sowohl in der Arbeitsspindel, als auch im Werkzeugmagazin von den Greiferzangen mit einer Bewegung senkrecht zur Achse der Werkzeuge erfaßt, bzw. freigegeben. Eine Bewegung in Richtung der Achse der Werkzeuge erlaubt es, diese aus der Arbeitsspindel herauszuziehen, bzw. einzustecken.

Bei diesem Werkzeugwechsler muß mindestens eines der schwenkbaren Elemente — Greiferarm, Greiferschwinge — einen Hebelarm mit einer Länge aufweisen, die sich nach der Strecke richtet, die ein Werkzeug vom Werkzeugmagazin zur Arbeitsspindel zurückzulegen hat. auch ein Greiferflügel mit Greifern, was zusammen ein gewisses Gewicht ergibt, zu bewegen ist, können auf die Schwenkachsen bezogen größere Drehmomente auftreten. Diese Drehmomente setzen sich aus Brems- und Beschleunigungsmomenten zusammen, die umso höher ausfallen, als die Geschwindigkeit gesteigert wird, mit der der Werkzeugwechsel durchzuführen ist. Da diese Drehmomente letztlich am Magazinständer angreifen, ist dieser besonders stabil auszuführen und am Boden abzustützen. Dies auch deshalb, weil die Greiferschwinge mit dem Greiferarm und dem Greiferflügel, d. h. praktisch der ganze Werkzeugwechsler in Richtung der Achse der Arbeitsspindel hin- und herbewegt werden muß, um ein Werkzeug aus der Arbeitsspindel herauszuziehen, bzw. hineinzustecken.

Es ist bereits bekannt zwischen einem Werkzeugmaschinenständer und einem getrennt angeordneten Werkzeugmagazin einen Werkzeugwechsler vorzusehen, der auf einer am Werkzeugmagazin befestigten Schiene in Form eines Schlittens bewegbar angeordnet ist und einen eigenen Antrieb aufweist (US-A-3 256 600). Die Schiene ist dabei mit ihrem anderen Ende am Maschinenständer der Werkzeugmaschine befestigt. Es besteht somit keine Verschiebemöglichkeit für den Maschinenständer. Bei einem anderen bekannten Werkzeugwechsler ist zwischen dem Werkzeugmagazin und dem verschiebbaren Maschinenständer eine ausziehbare Schiene vorgesehen (US-A-3 242 568).

Die Erfindung, wie sie in den Ansprüchen gekennzeichnet ist, löst die Aufgabe, eine Werkzeugmaschine der genannten Art mit einem Werkzeugwechsler zu schaffen, der die genannten Nachteile vermeidet, einen einfachen Bewegungsablauf gestattet und schädliche Einflüsse des Werkzeugwechsels auf die Arbeitsgenauigkeit der Arbeitsspindel ausschaltet.

Die durch die Erfindung erreichten Vorteile sind darin zu sehen, daß der Magazinständer einfacher und leichter ausgeführt werden kann. Ebenso verbessert sind die gegenseitigen Anpassungsmöglichkeiten was die Lage von Werkzeugmagazin zu Maschinenständer betrifft. Es ist somit einfacher, den Werkzeugwechsler auf verschiedene Anordnungen dieser Elemente zueinander anzupassen.

Auch ist gewährleistet, daß keine Erschütterungen, die vom Werkzeugmagazin ausgehen, die Arbeitsspindel erreichen und somit die Genauigkeit der Maschine beeinträchtigen.

Im folgenden wird die Erfindung anhand von ein Ausführungsbeispiel darstellenden Zeichnungen erläutert.

Es zeigt

Fig. 1 eine Ansicht eines Teils einer erfindungsgemäßen Werkzeugmaschine,

Fig. 2 eine Aufsicht einer Werkzeugmaschine gemäß Fig. 1,

Fig. 3 ein teilweise geschnitten dargestelltes Teil einer Werkzeugmaschine gemäß Fig. 1 in gegenüber Fig. 1 vergrößertem Maßstab in Aufsicht,

Fig. 4 eine Ansicht eines Teils gemäß Fig. 3.

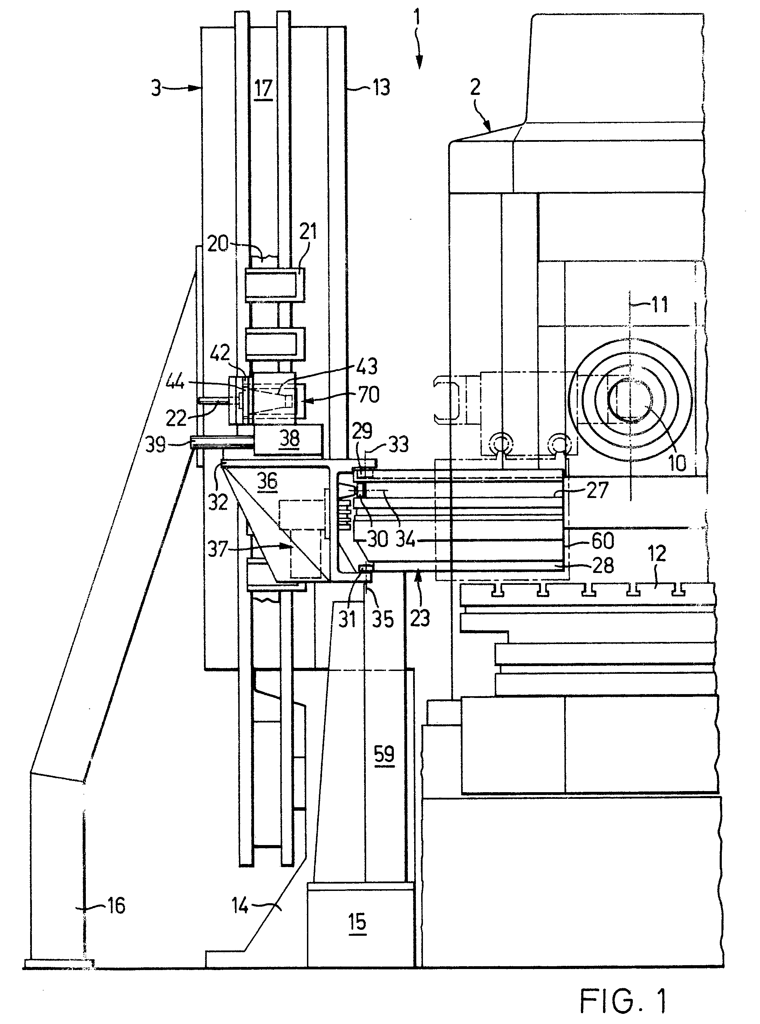

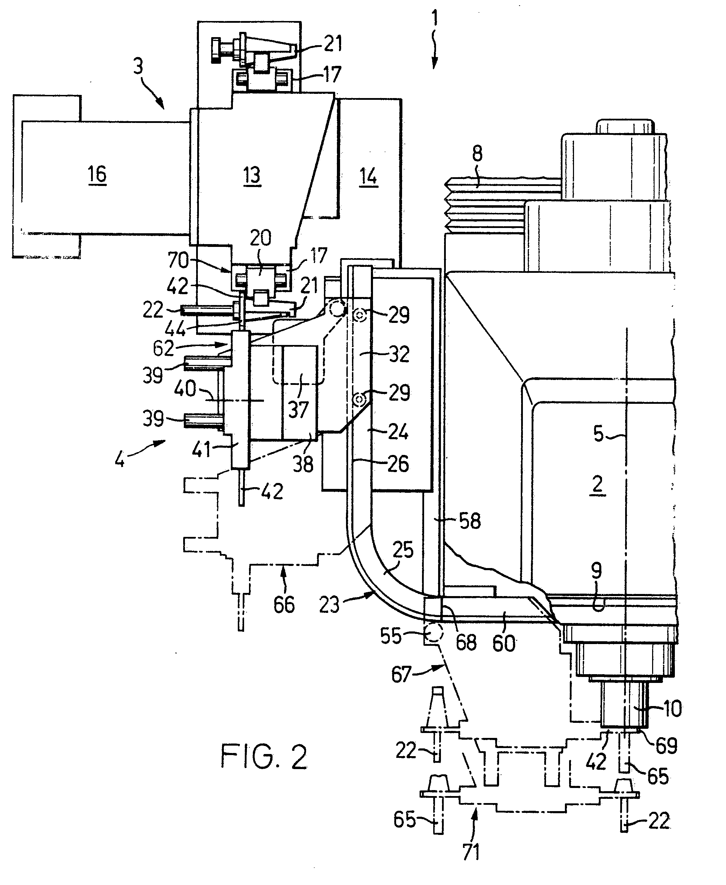

In den Fig. 1 und 2 ist eine Werkzeugmaschine 1, bestehend aus einem Maschinenständer 2, einem Werkzeugmagazin 3 und einem Werkzeugwechsler 4, dargestellt.

Der Maschinenständer 2 ist, wie aus Fig. 2 ersichtlich, längs einer Horizontalachse 5 hin- und herbewegbar, in an sich bekannter Art, auf den Führungen eines Grundgestells gelagert. Dieses Grundgestell mit den Führungen ist hier nicht sichtbar, weil es vom Balg 8 abgedeckt und so gegen Verschmutzung geschützt ist. Auf der Vorderseite 9 des Maschinenständers 2 ist eine Arbeitsspindel 10 angeordnet. Diese enthält eine an sich bekannte und hier deshalb nicht näher dargestellte Vorrichtung zur Aufnahme und zum Festhalten von Werkzeugen. Beispielsweise kann diese Vorrichtung speziell zur Aufnahme von Werkzeugen ausgebildet sein, an deren einem Ende ein Konus von bestimmter Länge und mit einem bestimmten Öffnungswinkel vorgesehen ist. Der Antrieb dieser Arbeitsspindel 10 erfolgt in ebenfalls bekannter Art und Weise. Die Arbeitsspindel 10 sei auch längs einer Vertikalachse 11 (Fig. 1) verschiebbar angeordnet.

Aus Fig. 1 ist ein dreh- und verschiebbarer Drehtisch 12 ersichtlich, auf dem Werkstücke aufgespannt werden. Der Drehtisch 12 ist dem Maschinenständer 2 vorgelagert und ebenfalls in

in sich bekannter Weise auf Führungen gelagert sowie angetrieben, wie hier nicht weiter dargestellt.

Das Werkzeugmagazin 3 besteht aus einem Magazinständer 13, der sich auf einem Magazinsockel 14 abstützt. Zum Magazinsockel 14 gehört ebenfalls ein weiterer Sockelteil 15. Eine Stütze 16 stützt den Magazinständer 13 zusätzlich seitlich ab. Am Magazinständer 13 ist eine Führungsschiene 17 für eine umlaufende Endloskette 20 angeordnet. Die Endloskette 20 trägt Halter 21 für Werkzeuge 22.

Die Endloskette 20 wird über ein Kettenrad angetrieben, das wiederum von einem Motor getrieben wird. Diese Elemente — Kettenrad, Motor sowie die Steuerung des Motors — sowie deren Anordnung sind an sich und auch für Werkzeugmagazine bekannt und dementsprechend nicht näher dargestellt.

Der Werkzeugwechsler 4 (Fig. 1 und 2) besteht nebst nachfolgend beschriebenen Teilen aus einer Schiene 23, welche aus einem geraden Teilstück 24 und einem Bogenstück 25 besteht. Die Schiene 23 weist auf beiden Seiten Laufflächen 26, 27, 28 für Rollen 29, 30, 31 eines Schlittens 32 auf. Die Rollen 29 und 31 dienen der Führung des Schlittens 32 in horizontaler Richtung und weisen vertikal und paarweise koaxial angeordnete Radachsen 33 und 35 auf. Die Rollen 30 dienen der vertikalen Führung des Schlittens 32 auf der Schiene 23 und weisen entsprechend waagrechte Achsen 34 auf. Von jeder der Rollen 29, 30, 31 sind längs des Schlittens 32 zwei Stück angeordnet, die auf den entsprechenden Laufflächen 26, 27, 28 abrollen.

Der Schlitten 32 besteht aus einem Schlittengestell 36, an dem die Rollen 29, 30, 31 gelagert, in dem eine Antriebseinheit 37 und auf dem der Dreharmschlitten 38 angeordnet ist.

Der Dreharmschlitten 38 ist auf dem Schlittengestell 36 über zwei auf diesem angeordneten Zylinderführungen 39 befestigt. Diese gestatten dem Dreharmschlitten 38 auf dem Schlittengestell 36 eine Hubbewegung in horizontaler Richtung auszuführen.

Auf dem Dreharmschlitten 38 ist um eine Achse 40 drehbar ein Dreharm 41 gelagert. An dessen beiden Enden ist je eine Greiferzange 42 angeordnet, die geeignet ist, ein Werkzeug 22 an dessen einem Konus 43 vorgeschalteten Bund 44 zu ergreifen und zu halten bzw. wieder loszulassen. Der Dreharmschlitten 38 mit dem Dreharm 41 und den Greiferzangen 42 ist aber an sich bekannt und auch in bekannter Art und Weise ausgeführt, so daß nicht näher darauf einzugehen ist.

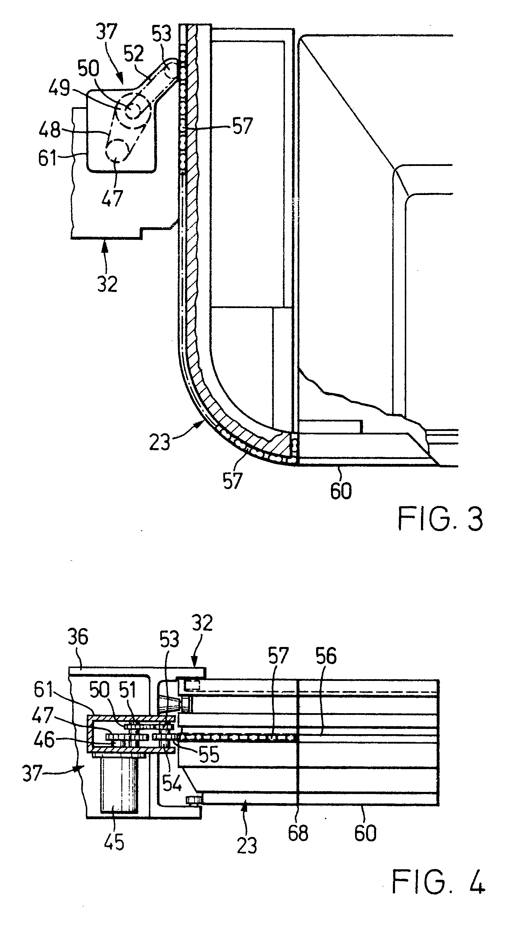

Die Antriebseinheit 37 (Fig. 3, 4) besteht aus einem Motor 45, der an einem am Schlittengestell 36 befestigten Antriebsgehäuse 61 angeflanscht ist, und über eine Welle 46 ein Kettenrad 47 antreibt. Dieses ist über eine Kette 48 mit einem weiteren Rad 49 verbunden, welches mit einem Kettenrad 50 geringeren Durchmessers auf einer Welle 51 drehbar gelagert aber fest verbunden ist. Eine zweite Kette 52 umschlingt das Kettenrad 50 sowie ein weiteres Kettenrad 53, das fest verbunden und gemeinsam mit dem Antriebsrad 55 auf einer Welle 54 sitzt. Als Motor 45 ist in diesem Beispiel ein Hydraulikmotor vorgesehen. Selbstverständlich kann ein solcher Werkzeugwechsler auch mit einem Antriebsmotor versehen werden, der auf einem anderen Funktionsprinzip beruht. Die Schiene 23 trägt in einer Nut 56 eine Kette 57, die sich über die ganze Länge der Schiene 23 erstreckt. Das Antriebsrad 55 kämmt mit der Kette 57, wodurch der Schlitten 32 angetrieben werden kann. Selbstverständlich können an Stelle der Kette 57 auch andere Elemente, wie Zahnstangen etc., angeordnet sein. Antriebseinheit 37 sowie Kette 57 bilden zusammen den Antrieb 37, 57.

Die Schiene 23 ist, wie aus Fig. 1 und 2 ersichtlich, über einen Rahmen 58 und einen Fuß 59 auf dem Sockelteil 15 abgestützt.

Ein von der Schiene 23 getrenntes, am Ständer 2 befestigtes Ergänzungsstück 60, das dieselben Laufflächen 26, 27, 28 für die Rollen 29, 30, 31 aufweist, verlängert die Schiene 23 gegen die Arbeitsspindel 10 hin.

Wirkungsweise

Soll ein Werkzeug 22 aus dem Werkzeugmagazin 3 mit einem Werkzeug 65 in der Arbeitsspindel 10 vertauscht werden, so laufen die dazu notwendigen Vorgänge folgendermaßen ab:

Zuerst wird die Endloskette 20 in eine Position 70 gebracht, bei der das gewünschte Werkzeug 22 für die Greiferzange 42 greifbar wird. Während des Umlaufens der Endloskette 20 befindet sich der Schlitten 32 in seiner Parkstellung 66, die in Fig. 2 mit einer strichpunktierten Linie angedeutet ist. In dieser Parkstellung 66 kann die Endloskette 20 bewegt werden, ohne mit den Greiferzangen 42 des Dreharmes 41 in Berührung zu kommen.

Hat das Werkzeug 22 die oben genannte und in Fig. 1 und 2 dargestellte Position 70 erreicht, so wird der Schlitten 32 in seine, dem Werkzeugmagazin 3 zugeordnete Endstellung 62, wie in Fig. 2 mit ausgezogenen Linien gezeichnet, gebracht. Während des Einfahrens in die Endstellung 62 ergreift eine Greiferzange 42 das Werkzeug 22 am Bund 44. Anschließend fährt der Schlitten 32 in seine Parkstellung 66. Dort kann der Konus 43 des Werkzeuges 22 durch nicht näher dargestellte, aber bekannte Mittel, gereinigt werden. Später fährt der Schlitten 32 in seine, der Arbeitsspindel 10 zugeordnete Endposition 67, welche in Fig. 2 mit strichpunktierten Linien angedeutet ist. Dies setzt voraus, daß der Maschinenständer 2 und die Arbeitsspindel 10 in eine bestimmte, wie in Fig. 2 gezeigte Stellung gebracht werden, in welcher das Ergänzungsstück 60 die Fortsetzung der Schiene 23 bilden kann und die Arbeitsspindel 10 auf der Höhe der Greiferzange 42 ist. In dieser Endposition 67 stützt sich der Schlitten 32 auf dem Ergänzungsstück 60 ab. Das Antriebsrad 55 dagegen ist immer noch mit der Kette 57, welche nur bis ans Schienenende 68 reicht, im Eingriff. Beim Einfahren des Schlittens 32 in die Endposition 67 hat die leere Greiferzange 42 den Bund 69 des Werkzeuges 65 erfaßt. Der Dreharmschlitten 38 kann nun in seine vordere Endstellung 71 geschoben werden, wodurch das Werkzeug 65 aus der Arbeitsspindel 10 herausgezogen wird.

In der vorderen Endstellung 71 des Dreharmschlittens 38 wird der Dreharm 41 um 180° gedreht, so daß nun das Werkzeug 22 vor die Arbeitsspindel 10 zu liegen kommt. Der Dreharmschlitten 38 braucht nun nur noch in seine hintere Endstellung zurückgezogen zu werden und das Werkzeug 22 ist in die Arbeitsspindel 10 eingesetzt. Der Schlitten 32 wird nun in seine Endstellung 62 zurückgezogen, wodurch die Greiferzange 42 den Bund 44 des Werkzeuges 22 freigibt und das Werkzeug 65 in einen Halter 21 der Endloskette 20 im Werkzeugmagazin 3 eingesetzt wird.

Dann kehrt der Schlitten 32 in die Parkstellung 66 zurück und der Werkzeugwechsler ist bereit, einen weiteren Werkzeugwechsel vorzunehmen.

## Patentansprüche

1. Werkzeugmaschine (1) mit einem verschiebbaren Maschinenständer (2) für eine Arbeitsspindel (10) und einem, vom Maschinenständer (2) getrennt angeordneten Werkzeugmagazin (3) mit einem daran angeordneten Werkzeugwechsler (4), dadurch gekennzeichnet, daß der Werkzeugwechsler (4) einen Schlitten (32), der auf einer Schiene (23) bewegbar angeordnet ist, sowie einen Antrieb (37, 57) für den Schlitten (32) aufweist und die Schiene (23) am Werkzeugmagazin (3) befestigt ist, ferner daß ein von der Schiene (23) getrenntes und diese verlängerndes Ergänzungsstück (60) am Maschinenständer (2) angeordnet ist.

2. Werkzeugmaschine (1) gemäß Anspruch 1, dadurch gekennzeichnet, daß der Antrieb (37, 57) aus einer, auf der Schiene (23) angeordneten Zahnstange oder Kette (57), sowie einem, ein in die Zahnstange oder Kette (57) eingreifendes Antriebsrad (55) treibenden, auf dem Schlitten (32) angeordneten Antriebsmotor (45) besteht.

3. Werkzeugmaschine (1) gemäß Anspruch 1, dadurch gekennzeichnet, daß die Schiene (23), sowie das Ergänzungsstück (60) senkrecht und waagrecht angeordnete Laufflächen (26, 27, 28) für Rollen (29, 30, 31) des Schlittens (32), deren Achsen (33, 34, 35) waagrecht und senkrecht gerichtet sind, aufweisen.

## Claims

1. Machine tool (1) comprising a displaceable machine stand (2) for a work spindle (10), a tool magazine (3) arranged separate from the machine stand (2) and a tool changer (4) arranged at the tool magazine (3), characterised in that a carriage (32) movably arranged upon rail means (23) and a drive means (37, 57) for said carriage (32) are provided for said tool changer (4), that the rail means (23) is secured to said tool magazine (3) and in that an extension element (60) separate from said rail means (22) for extending said rail means (23) is arranged at said machine stand (2).

2. Machine tool (1) according to claim 1, characterised in that said drive means (37, 57) comprises an element (57) arranged at said rail means, a drive gear (55) engaging with said element (57) and a drive motor (45) arranged at said carriage (32) and driving said drive gear (55).

3. Machine tool (1) according to claim 1, characterised in that said carriage (32) is provided with rolls (29, 30, 31), said rail means (23) and said extension element (60) containing travelling surfaces (26, 27, 28) arranged substantially vertically and horizontally for the rolls (29, 30, 31) of said carriage (32) and said rolls (29, 30, 31) having axes directed substantially horizontally and vertically.

## Revendications

1. Machine-outil (1) avec un montant de machine coulissant (2) pour une broche d'usinage (10) et un magasin à outils (3) disposé séparément du montant de machine (2) avec un dispositif d'échange d'outil (4) monté sur lui, caractérisée en ce que le dispositif d'échange d'outil (4) comporte un chariot (32) disposé pour se déplacer sur un rail (23), ainsi qu'une commande d'entraînement (37, 57) pour le chariot (32), le rail (23) étant fixé sur le magasin à outils (3), en outre en ce qu'un tronçon de complément (60), distinct du rail (23) et le prolongeant, est disposé sur le montant de machine (2).

2. Machine-outil (1) selon la revendication 1, caractérisée en ce que la commande d'entraînement (37, 57) est constituée par une crémaillère ou une chaîne (57) disposée sur le rail (23), ainsi que par un moteur d'entraînement (45) disposé sur le chariot (32) et commandant une roue d'entraînement (55) engrenant dans la crémaillère ou la chaîne (57).

3. Machine-outil (1) selon la revendication 1, caractérisée en ce que le rail (23) ainsi que le tronçon de complément (60) comportent des surfaces de roulement (26, 27, 28) disposées verticalement et horizontalement pour des galets (29, 30, 31) du chariot (32), les axes (33, 34, 35) de ces galets étant dirigés horizontalement et verticalement.

FIG. 1

FIG. 2

FIG. 3

FIG. 4